# EUROPEAN PATENT APPLICATION

(11) **EP 2 177 344 A1**
(43) Date of publication of application: **21.04.2010**
(21) Application number: 09252427.1
(22) Date of filing: 15.10.2009
(51) Int. Cl.: B29C 73/10

(54) **Patch**

(30) Priority: 16.10.2008 US 252401
(71) Applicant: Rolls-Royce Corporation, Indianapolis, IN 43641 (US)
(72) Inventor: Rice, Edward Claude, Indinapolis, Indiana 43234 (US)
(74) Representative: Holmes, Matthew Peter

(57) **Abstract**

A patch for repairing damaged structures is disclosed herein. The patch includes a plurality of structural fibers. The patch also includes a quantity of binder at least partially encapsulating the plurality of structural fibers. The patch also includes a plurality of carbon nanotubes substantially encapsulated in the binder with the plurality of structural fibers. An inventive and exemplary method for using the patch is also disclosed.

## Description

### BACKGROUND OF THE INVENTION

### 1. Field of the Invention

The invention relates to a patch for repairing metallic or composite structures.

### 2. Description of Related Prior Art

Structures employed in the aerospace industry and in other operating environments are sometimes damaged during operation. Patches can be used to repair damage so that fully replacing the damaged structure is not required. A patch can be a sheet of material that is fixed the damaged structure by welding or fasteners.

### SUMMARY OF THE INVENTION

In summary, the invention is a patch for repairing damaged structures. The patch includes a plurality of structural fibers. The patch also includes a quantity of binder at least partially encapsulating the plurality of structural fibers. The patch also includes a plurality of carbon nanotubes substantially encapsulated in the binder with the plurality of structural fibers. An inventive and exemplary method for using the patch is also disclosed.

### BRIEF DESCRIPTION OF THE DRAWING

Advantages of the present invention will be readily appreciated as the same becomes better understood by reference to the following detailed description when considered in connection with the accompanying drawings wherein:

Figure 1 is a perspective view of an exemplary damaged structure;

Figure 2 is a view showing a magnified portion of the exemplary damaged structure with a patch being positioned over the damaged portion of the structure;

Figure 3 is a simplified flow diagram of one method for practicing the invention;

Figure 4 is a cross-sectional view through a repaired portion of a structure according to an exemplary embodiment of the invention;

Figure 5 is a top view of a repaired portion of a structure according to an exemplary embodiment of the invention; and

Figure 6 is a cross-sectional taken along section lines 6 - 6 in Figure 5.

### DETAILED DESCRIPTION OF THE EXEMPLARY EMBODIMENT

A plurality of different embodiments of the invention is shown in the Figures of the application. Similar features are shown in the various embodiments of the invention. Similar features have been numbered with a common reference numeral and have been differentiated by an alphabetic suffix. Similar features are structured similarly, operate similarly, and/or have the same function unless otherwise indicated by the drawings or this specification. Furthermore, particular features of one embodiment can replace corresponding features in another embodiment or can supplement other embodiments unless otherwise indicated by the drawings or this specification.

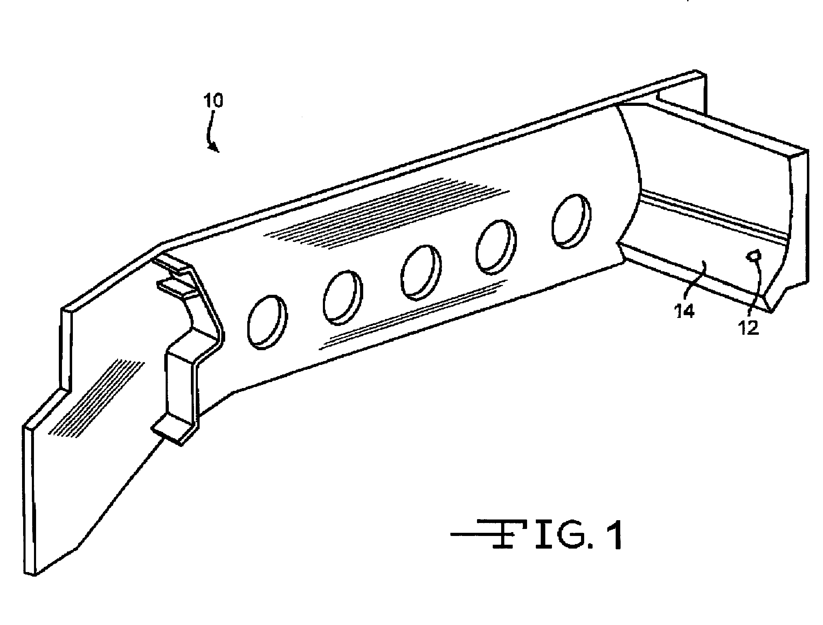

Referring now to Figure 1, a structure or body 10 includes a region 12 of damage. The exemplary structure 10 can be a vanebox associated with an aircraft. Generally, a vanebox can direct a stream of air for propelling or positioning the aircraft, such as in short and/or vertical take-offs and landings. It is noted that the present invention is not limited to repairing vaneboxes and that alternative embodiments of the invention can be practiced with structures used for other purposes.

In the first exemplary embodiment of the invention, debris can be drawn into the vanebox and strike the surface 14, causing the region 12 of damage. The region 12 of damage can be a through-hole in a first surface 14 of the structure 10. Alternatively, the region 12 of damage can be any other form of void or surface marring. Damage can be defined differently in various operating environments and for various structures. The invention and embodiments thereof are not limited to the repair of any particular kind of damage.

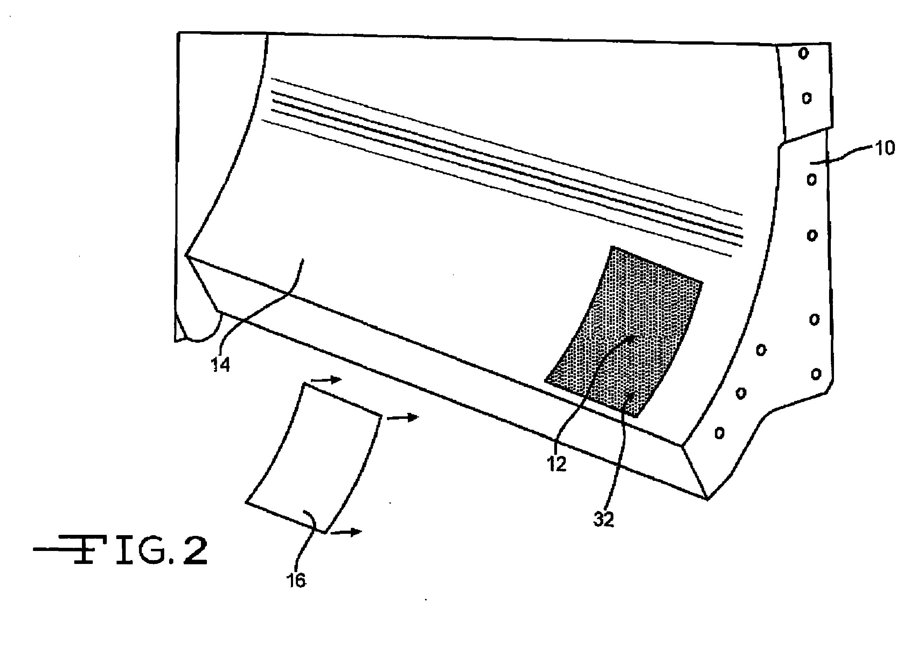

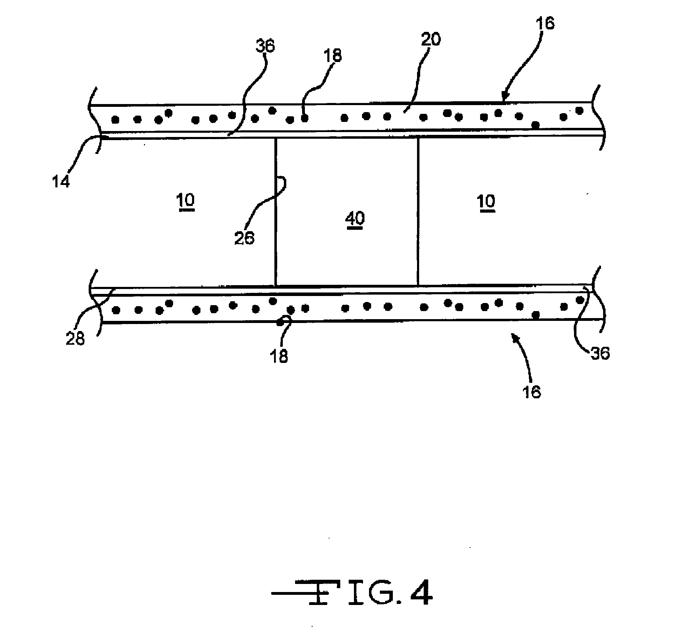

Referring now to Figure 2, a patch 16 can be applied to the surface 14 to repair the region 12 of damage. The exemplary patch 16 can be approximately 0.010 inch thick, but can be formed to a different thickness in alternative embodiments of the invention. Figure 4 shows that the patch 16 can include a plurality of structural fibers 18. The fibers 18 are illustrated in Figure 4 coming into and out of the page, extending generally parallel to one another. However, less than all the fibers 18 can be parallel to one another. The arrangement shown in Figure 4, in which the fibers 18 in both top and bottom patches 16 extend parallel to one another, can be modified such that fibers 18 in one of the patches 16 extend transverse or oblique to the fibers 18 in the other patch 16. For example, the orientation of the bottom patch 16 in Figure 4 could be changed so that the fibers 18 of that patch 16 extend across the page rather than out of the page.

The fibers 18 can be carbon fibers, such as IM-7 fibers provided by the Hexcel® Corporation, or glass fibers, boron fibers, or any similar fibers. The fibers 18 are structural in the sense that the fibers 18 can enhance the load-carrying characteristics of the structure 10 around the damaged area. For example, when the patch 16 is affixed to the structure 10, the fibers 18 can assist the structure 10 in preventing expansion of the damage.

The patch 16 also includes a quantity of binder 20 at least partially encapsulating the plurality of structural fibers 18. The binder 20 can be a resin. The binder 20 can be phthalonitrile or a mixture containing phthalonitrile. The binder 20 can be chosen to match the coefficient of thermal expansion of the structure 10 and also match other properties of the underlying structure 10.

The patch 16 also includes a plurality of carbon nanotubes substantially encapsulated in the binder 20 with the plurality of structural fibers 18. The carbon nanotubes can be dispersed generally evenly throughout the binder 20 or can be concentrated in particular areas of the patch 16 if desired. The carbon nanotubes can enhance the strength to the patch 16. Also, for metallic structures, the carbon nanotubes can allow the patch 16 to behave similarly as the structure, such as in thermal and electrical conductivity. The amount of carbon nanotubes added to the binder 20 can be about 2-3% by weight, or can be added in some other amount The exemplary structure 10 can be metallic, but the invention can also be practiced to repair composite bodies that have incurred damage.

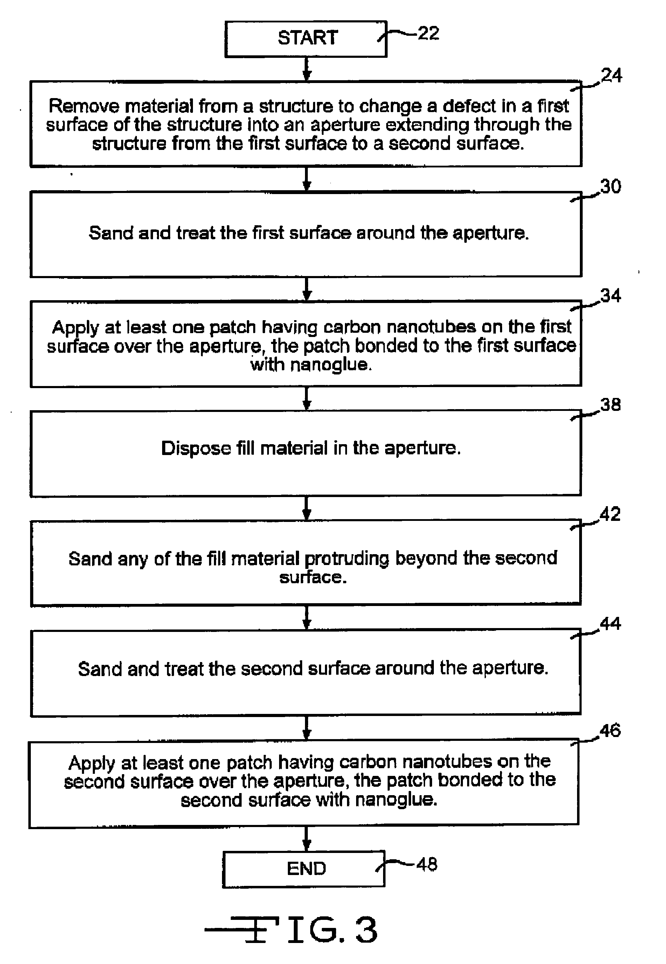

Figure 3 is a simplified flow diagram according to an exemplary embodiment of the invention. The process starts at step 22. Referring to both Figures 3 and 4, at step 24 of the exemplary process, material can be removed from the structure 10 to change the region 12 of damage (shown in Figure 2) in the surface 14 from a generally irregular shape into an aperture 26 extending through the structure 10 from the first surface 14 to a second surface 28. Step 24 can be desirable to eliminate the possibility of stress concentrations and also to prevent cracks from propagating through the structure 10. The damaged area of the structure 10 can be modified in other ways in alternative embodiments of the invention. For example, the damage 12 (shown in Figure 2) can be transformed into a blind aperture, a notch, a truncated conical recess, or any other shape.

At step 30 of the exemplary process, the surface 14 around the aperture 26 can be sanded and treated to promote adherence of the patch 16 to the surface 14. Other processes can be applied to the surface, such as grinding, abrading or lapping, as desired. Figure 2 shows an area 32 that has been sanded and treated. The area 32 can be larger than the patch 16. The surface 14 can be treated by being coated after sanding to prevent oxidation, such as by alodining.

Referring again to Figures 3 and 4, at step 34 of the exemplary process, at least one patch 16 can be applied on the surface 14 over the aperture 26. The patch 16 can be bonded to the surface 14 with nanoglue 36. Nanoglue was developed was developed by researchers at Rensselaer Polytechnic Institute and can bond materials that don't normally adhere to one another. Nanoglue is based on self-assembling nanoscale chains less than a nanometer thick. Nanoglue is commercially available and recent developments have occurred in which the adhesive capabilities can be enhanced. Nanoglue can define a bond between two structures, such as the structure 10 and the patch 16 that strengthens as temperature increases. Other forms of adhesive can be applied as desired.

At step 38 of the exemplary process, fill material 40 can be directed into the aperture 26. The fill material 40 can be any appropriate material or combination of materials in view of the operating environment of the structure being repaired and in view of the chemical/metallurgical nature of the structure 10 being repaired. In the exemplary embodiment of the invention, the fill material 40 can include phthalonitrile and a plurality of carbon nanotubes. The fill material 40 can also include other components if desired.

At step 42 of the exemplary process, any of the fill material 40 protruding beyond the second surface 28 can be sanded so that the fill material 40 is flush with the surrounding surface 28. At step 44, the surface 28 around the aperture 26 can be sanded and treated to promote adherence of a patch 16 to the surface 28. At step 46, a patch 16 can be applied to the surface 28 of the structure 10. The patch 16 can be bonded to the surface 28 over the aperture 26 with nanoglue 36. The exemplary process ends at step 48.

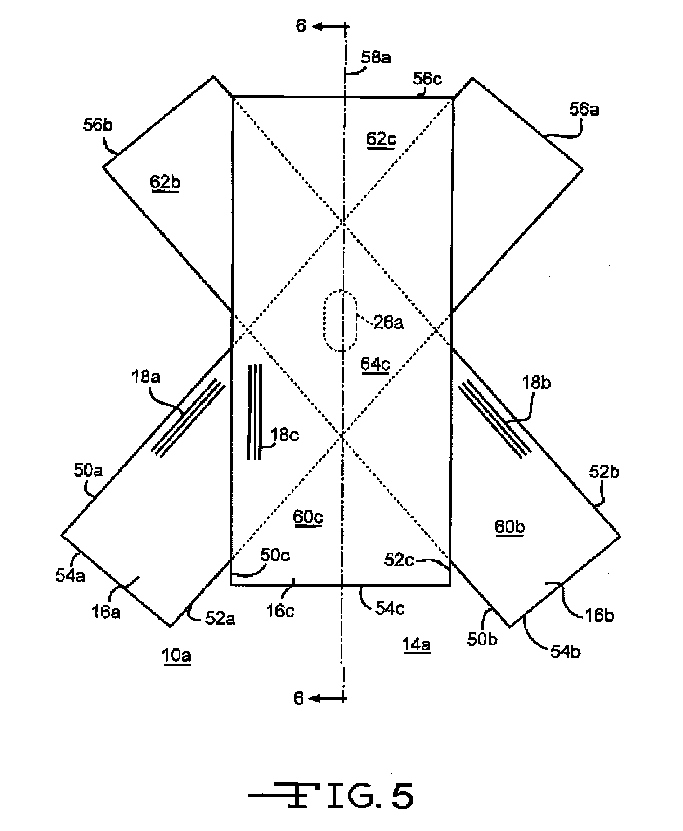

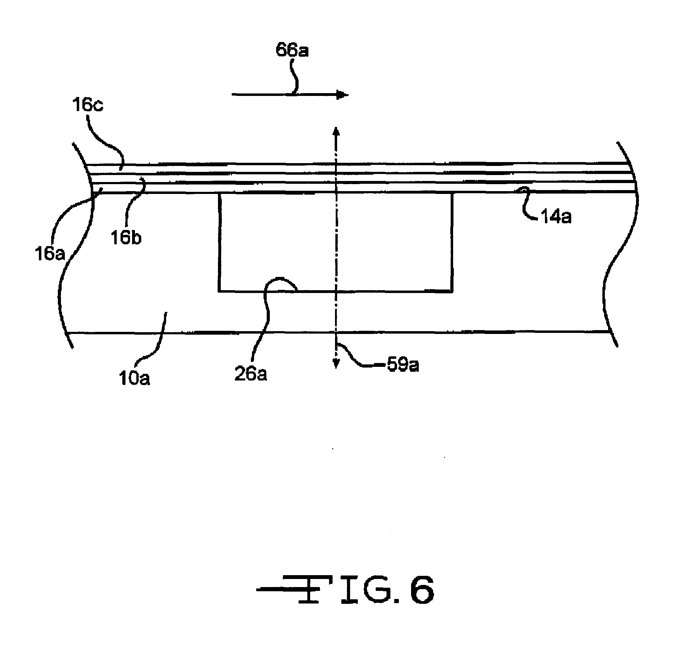

Figures 5 and 6 show another embodiment of the invention in which a plurality of patches 16a, 16b,16c are layered with respect to one another. Figure 5 is a top view of a portion of a repaired structure 10a. Figures 6 is a partial cross-section taken along section lines 6 - 6 in Figure 5, showing the cross-section immediately around a repaired portion of the structure 10a. As shown in Figure 6, the structure 10a was damaged and a void in the form of a blind aperture 26a was formed in the structure 10a to change an irregularly-shaped region of damage into a known shape.

A first or base patch 16a can be bonded to the surface 14a over the aperture 26a. As shown in Figure 5, the base patch 16a can extend between lateral edges 50a, 52a, and between axial edges 54a, 56a. The base patch 16a includes a plurality of structural fibers 18a (only a portion of the fibers 18a are shown to enhance the clarity of Figure 5). The fibers 18a are generally oriented in a direction parallel to the lateral edges 50a, 52a and oblique to a longitudinal axis 58a of the aperture 26a in the top plane. The aperture 26a also has longitudinal axis 59a in the side plane, as shown in Figure 6. It is noted that the cross-sectional area of the patch 16a, or any of exemplary patch for practicing the invention, can be any desired value and any desired shape. The base patch 16a can be fully bonded to the surface 14a with nanoglue.

As shown in Figure 6, a second or intermediate patch 16b can be positioned over the base patch 16a. As shown in Figure 5, the intermediate patch 16b can extend between lateral edges 50b, 52b, and between axial edges 54b, 56b. The intermediate patch 16b includes a plurality of structural fibers 18b (only a portion of the fibers 18b are shown to enhance the clarity of Figure 5). The fibers 18b are generally oriented in a direction parallel to the lateral edges 50b, 52b and oblique to the longitudinal axis 58a of the aperture 26a in the top plane.

The intermediate patch 16b can be partially bonded to the surface 14a and extend over the aperture 26a. For example, a portion 60b of the intermediate patch 16b bounded by axial edge 54b, lateral edges 50b, 52b, and the lateral edge 52a of the base patch 16a can be bonded to the surface 14a. Also, a portion 62b of the intermediate patch 16b bounded by axial edge56b, lateral edges 50b, 52b, and the lateral edge 50a of the base patch 16a can be bonded to the surface 14a. The remainder of the intermediate patch 16b, bounded by lateral edges 50a, 52a, 50b, 52b, can be bonded to a top surface of the base patch 16a. The intermediate patch 16b can be partially bonded to the surface 14a and partially bonded to the top surface of the base patch 16a with nanoglue.

As shown in Figure 6, a third or top patch 16c can be positioned over the base patch 16a and the intermediate patch 16b. As shown in Figure 5, the top patch 16c can extend between lateral edges 50c, 52c, and between axial edges 54c, 56c. The top patch 16c includes a plurality of structural fibers 18c (only a portion of the fibers 18c are shown to enhance the clarity of Figure 5). The fibers 18c are generally oriented in a direction parallel to the lateral edges 50c, 52c and parallel to the longitudinal axis 58a of the aperture 26a in the top plane.

The top patch 16c can be partially bonded to the surface 14a. For example, a portion 60c of the top patch 16c bounded by axial edge 54c, lateral edges 50c, 52c, the lateral edge 52a of the base patch 16a, and the lateral edge 50b of the intermediate patch 16b can be bonded to the surface 14a with nanoglue. Also, a portion 62c of the top patch 16c bounded by axial edge 56c, lateral edges 50c, 52c, the lateral edge 50a of the base patch 16a, and the lateral edge 52b of the intermediate patch 16b can be bonded to the surface 14a. A third portion 64c of the top patch 16c, bounded by lateral edge 52c, 50a, 52a, 50b, 52b, can be bonded to a top surface of the intermediate patch 16b with nanoglue.

The patches 16a, 16b, 16c can be oriented relative to one another such that the fibers 18a, 18b, 18c extend in different directions relative to one another. For example, the majority of the structural fibers 18a of the patch 16a can be non-parallel to a majority of the structural fibers 18b of the patch 16b and also non-parallel to a majority of the structural fibers 18c of the patch 16c. Such an embodiment of the broader invention can be desirable to enhance the strength of the repaired structure 10a. The fibers 18a, 18b, 18c can form a lattice-like grid that can make the repaired portion of the structure 10a stronger than the structure 10 prior to being damaged.

The exemplary structure 10a can be a component of an aircraft, such as a vanebox at least partially defining a path for a fluid stream for propelling the aircraft represented by arrow 66a in Figure 6. The exemplary structure 10a can therefore be subjected to relatively high tensile loads and orienting the patches 16a, 16b. 16c differently from one another can therefore be desirable. Also, the exemplary patches 16a, 16b, 16c can be desirable because, as set forth above, each patch can be relatively thin. Thus, a single patch or a layered structure of a plurality of patches will minimally disturb the flow of the fluid stream.

The exemplary embodiments of the invention disclose patches having a plurality of structural fibers extending substantially parallel with one another. Some of the fibers may not parallel with the majority of the other fibers. However, it is noted that in alternative embodiments of the invention, the structural fibers can be more randomly oriented. Also, the fibers can be arranged in patterns different than parallel to one another and still define an embodiment of the invention. For example, the fibers can be positioned in a wheel-like arrangement with a hub and spoke pattern.

While the invention has been described with reference to an exemplary embodiment, it will be understood by those skilled in the art that various changes may be made and equivalents may be substituted for elements thereof without departing from the scope of the invention. In addition, many modifications may be made to adapt a particular situation or material to the teachings of the invention without departing from the essential scope thereof. Therefore, it is intended that the invention not be limited to the particular embodiment disclosed as the best mode contemplated for carrying out this invention, but that the invention will include all embodiments falling within the scope of the appended claims. Also, while this document may draw attention to certain features believed to be of particular importance, it should be understood that the Applicant claims protection in respect of any patentable feature or combination of features hereinbefore referred to and/or shown in the drawings whether or not particular emphasis has been placed thereon.

## Claims

1. A patch for repairing damaged structures comprising:
a plurality of structural fibers;
a quantity of binder at least partially encapsulating said plurality of structural fibers; and
a plurality of carbon nanotubes substantially encapsulated in said binder with said plurality of structural fibers.

2. The patch of claim 1, wherein said plurality of structural fibers are further defined as being carbon fibers or glass fibers and/or wherein said binder is further defined as at least partially including phthalonitrile; and/or wherein the patch further comprises an adhesive layer of nanoglue.

3. The patch of claim 1 or 2, wherein the combination of said plurality of structural fibers, said quantity of binder, and said plurality of carbon nanotubes is substantially 0.010 inch thick; and/or wherein at least a majority of said plurality of structural fibers extend substantially parallel with one another.

4. A method of repairing a defect in a surface of a structure with the patch recited in claim 1 comprising the steps of:
removing material from a structure to change a defect in a surface of the structure into a void of known shape;
disposing fill material in the void; and
applying at least one patch on the surface over the void wherein the patch includes a plurality of structural fibers, a quantity of binder at least partially encapsulating the plurality of structural fibers, and a plurality of carbon nanotubes substantially encapsulated in the binder with the plurality of structural fibers.

5. The method of claim 4, wherein said disposing step is further defined as disposing a fill material having carbon nanotubes in the void; or wherein said disposing step is further defined as disposing a fill material having phthalonitrile and carbon nanotubes in the void.

6. The method of claim 4 or 5, further comprising the step of bonding the at least one patch to the surface with nanoglue.

7. The method of any one of claims 4 to 6, wherein:
said removing step includes the step of forming the void as a through-aperture in the structure; and
said applying step includes the steps of:
applying a first patch of patch across a first opening of the through-aperture; and
applying a second patch of patch across a second opening of the through-aperture opposite the first opening, wherein said disposing step is performed between said step of applying the first patch and said step of applying the second of patch.

8. The method of any one of claims 4 to 7, wherein said applying step is further defined as:
layering a plurality of patches on the surface over the void.

9. The method of claim 8, further comprising the step of:
orienting at least two of the patches in different directions relative to one another such that a majority of the structural fibers of one of the patches is non-parallel to a majority of the structural fibers of another one of the patches.

10. An apparatus repaired according to the method of claim 7 and comprising:
a body defining a void;
a quantity of fill material disposed in said void; and
at least one patch covering said void and said filler material.

11. The apparatus of claim 10, wherein said filler material is a combination of resin and carbon nanotubes; and/or wherein said body is at least partially formed from metal or a composite material.

12. The apparatus of claim 10 or 11, wherein said patch is further defined as including a plurality of carbon fibers oriented parallel to one another.

13. The apparatus of any one of claims 9 to 12, wherein said body is further defined as a component of an aircraft.

14. The apparatus of claim 13, wherein said body is a vanebox at least partially defining a path for a fluid stream propelling the aircraft.

15. The apparatus of claim 14, wherein said at least one patch further comprises first and second patches oriented in different directions relative to the path for the fluid stream.
